# EUROPÄISCHE PATENTSCHRIFT

(11) **EP 2 071 533 B1**
(45) Veröffentlichungstag und Bekanntmachung des Hinweises auf die Patenterteilung: **30.12.2020**
(21) Anmeldenummer: 08019234.7
(22) Anmeldetag: 04.11.2008
(51) Int. Cl.: G07F 19/00, G07D 11/00

(54) **Eingabevorrichtung für Wertscheine**
Entry device for vouchers
Dispositif d'introduction pour documents de valeur

(30) Priorität: 10.12.2007 DE 202007017227 U
(43) Veröffentlichungstag der Anmeldung: 17.06.2009
(73) Patentinhaber: Wincor Nixdorf International GmbH, 33106 Paderborn (DE)
(72) Erfinder: Grimm, Axel, 32839 Steinheim (DE); Schulz, Michael, 33104 Paderborn (DE); Bonke, Hubert, 33129 Delbrück (DE)

(56) Entgegenhaltungen:
- WO-A1-02/33666
- DE-A1- 19 748 864
- US-A- 4 884 671
- US-A1- 2006 244 803

## Beschreibung

Die Erfindung bezieht sich auf eine Eingabevorrichtung für Wertscheine gemäß dem Oberbegriff des Anspruchs 1.

Derartige mit Eingabevorrichtungen ausgestatteten Selbstbedienungsgeräte wie Kassenautomaten sind in den verschiedensten Ausführungen bekannt. Kassenautomaten werden an zahlreichen Verkaufsstellen eingesetzt und verfügen in der Regel über Funktionen sowohl zur Bargeldaufnahme als auch für den bargeldlosen Zahlungsverkehr.

Ein Bedienfeld weist die zum Betrieb des Kassenautomaten notwendigen Komponenten auf, beispielsweise in Form von Tastaturen, Ein- und Ausgabevorrichtungen und Anzeigevorrichtungen. Die Kassenautomaten sind beispielsweise mit Leseeinrichtungen, Geldeingabeeinrichtungen und dergleichen ausgestattet. Ferner können sie Ausgabevorrichtungen beispielsweise zum Ausgeben von Quittungen und dergleichen enthalten.

Die Anzeigevorrichtungen sind beispielsweise Bildschirme und/oder Displays. Für den Betrieb des Kassenautomaten ist dieser mit einer entsprechend ausgelegten Steuerungseinrichtung ausgestattet. Der Vorteil dieser Kassenautomaten liegt darin, dass sie mit Speichereinrichtungen für die Wertscheine ausgestattet sind, so dass die Sicherheit für die Verkaufsstätten, beispielsweise Tankstellen, erhöht ist.

Der Benutzer eines Kassenautomaten führt den Wertschein in die Eingabevorrichtung ein. Dieser wird dann mittels einer Einzugsvorrichtung in den Kassenautomaten zur Auswertung eingezogen. Sofern für die Bezahlung mehrere Wertscheine notwendig sind, muss der Benutzer diese nacheinander in die Eingabevorrichtung einführen. In der Regel steht der in die Eingabevorrichtung eingeführte Wertschein schräg zur Mittellängsachse der Eingabevorrichtung, wobei der zwischen den Kanten des Wertscheines und der Mittellängsachse der Eingabevorrichtung eingeschlossene Winkel ein relativ kleiner spitzer Winkel ist.

Dies kann jedoch dazu führen, dass der in die Eingabevorrichtung eingeführte Wertschein zurücktransportiert wird, da eine Auswertung durch die entsprechenden Einrichtungen nicht möglich ist.

Durch das nochmalige Einführen des Wertscheines bzw. der Wertscheine wird die Dauer für einen Bezahlvorgang erhöht. Dies wird von vielen Benutzern als unangenehm empfunden.

Aus dem Dokument WO 02/33666 A1 ist ein Banknotenprüfgerät bekannt, an dessen Vorderseite eine Spritzgußschrägfläche vorgesehen ist, die einen Einlass definiert und auch einen sanften Übergang in den Banknotenkanal des Banknotenprüfgerätes ermöglicht. Hierbei wird als nachteilig angesehen, dass das Zusammenfügen der Schrägfläche mit dem Eingang des Banknotenkanals zu einer Unterbrechung 7 oder einer Kante führen kann, wodurch ein Banknotenstau beim Zurückweisen der Banknote durch die Banknotenprüfeinheit auftreten kann.

Der vorliegenden Erfindung liegt die Aufgabe zugrunde, eine für ein Selbstbedienungsgerät wie einen Kassenautomaten ausgelegte Eingabevorrichtung für Wertscheine zu schaffen, bei welcher der Effekt des Rücktransports von durch die zur Mittellängsachse der Eingabevorrichtung schräg stehenden Wertscheinen verringert wird.

Die gestellte Aufgabe wird erfindungsgemäß dadurch gelöst, dass die Eingabevorrichtung mit wenigstens einem mechanisch wirkenden Ausrichtelement zur Ausrichtung für die in die Eingabevorrichtung eingeführten Wertscheine versehen ist.

Je nach Auslegung des Ausrichtelementes bzw. der Ausrichtelemente erfolgt bereits eine Ausrichtung, wenn der Benutzer eines Kassenautomaten den Wertschein in die Eingabevorrichtung einführt oder die Ausrichtung erfolgt, wenn mittels der Einzugsvorrichtung der Wertschein weitertransportiert wird. Da das Ausrichtelement bzw. die Ausrichtelemente mechanische Bauelemente sind, wird beispielsweise der zusätzliche elektrische oder elektronische Aufwand nicht erhöht.

In einer bevorzugten Ausführung ist vorgesehen, dass die Eingabevorrichtung mit zwei im Abstand zueinander angeordneten Ausrichtelementen ausgerüstet ist. Dadurch wird eine optimale Ausrichtung erreicht.

Die Höhe der Eingabevorrichtung ist relativ gering. Es ist deshalb vorgesehen, dass jedes Ausrichtelement als Flachteil ausgebildet ist, wobei die Höhe an die Höhe der Eingabevorrichtung angepasst ist. Das Flachteil könnte beispielsweise aus einem Metallblech gefertigt werden. Dabei ist in einfachster Weise vorgesehen, dass jedes Flachteil zumindest an der Eingabeseite mit wenigstens einer schräg zur Mittellänlängsachse der Eingabevorrichtung verlaufenden Anlaufflächen versehen ist. Sofern die Eingabevorrichtung mit zwei beabstandeten Flachteilen ausgerüstet ist, wird dadurch ein Ausrichtkeil gebildet.

Eine besonders exakte Ausrichtung ist gegeben, wenn jedes Ausrichtelement an der Eingabeseite mit zwei im Winkel zueinander stehenden Anlaufflächen versehen ist, wobei der zur Mittellängsachse eingeschlossene Schrägungswinkel der ersten Anlauffläche größer ist als der zur Mittellängsachse eingeschlossene Winkel der anschließenden Anlauffläche. Die erste, der Eingabeseite zugewandte Anlauffläche bzw. die beiden Anlaufflächen könnten dann eine Vor-Ausrichtung bewirken, während die anschließende Anlauffläche bzw. die anschließenden Anlaufflächen eine nachträgliche Ausrichtung bewirken. Durch diese unterschiedlichen Winkel zur Mittellängsachse der Eingabevorrichtung ist der eingeschlossene Winkel zwischen den sich anschließenden Anlaufflächen ein stumpfer Winkel.

Es ist ferner noch in besonders vorteilhafter Weise vorgesehen, dass jedes Ausrichtelement an der der Eingabeseite gegenüberliegenden Seite mit einer Schrägfläche versehen ist, die entgegen der eingabeseitigen Anlauffläche zur Mittellängsachse der Eingabevorrichtung entgegengesetzt geneigt ist.

Es ist ferner noch vorgesehen, dass jedes Ausrichtelement gegen die Horizontale geneigt ist, wobei der Abstand der einander abgewandt liegenden Kanten zum Boden der Eingabevorrichtung größer ist als der der einander zugewandt liegenden Kanten. Dadurch wird dem Umstand Rechnung getragen, dass Wertscheine in Form von Geldscheinen unterschiedliche Breiten haben.

Damit die eingegebenen Wertscheine ausgerichtet in das Selbstbedienungsgerät eingezogen werden, ist vorgesehen, dass die Ausrichtelemente, in Einzugsrichtung der Wertscheine gesehen, direkt vor der Einzugsvorrichtung angeordnet sind.

Das Ausrichtelement bzw. die Ausrichtelemente können auch mit dem Boden der Eingabevorrichtung ein einstückiges Formteil bilden, da dies fertigungstechnisch besonders günstig ist.

In weiterer Ausgestaltung ist dann noch vorgesehen, dass die Eingabevorrichtung trichterförmig, jedoch mit einer viereckigen Grundkontur gestaltet ist, wobei die Ausrichtelemente bzw. die Flachteile an dem Boden des Trichters festgelegt sind. Direkt oberhalb des Bodens ist dann in der Wand des Kassenautomaten der Eingabeschlitz vorgesehen.

Anhand der beiliegenden Zeichnungen wird die Erfindung noch näher erläutert.

Es zeigen:
- Figur 1: ein Ausführungsbeispiel eines Kassenautomaten in einer Frontansicht, rein schematisch
- Figur 2: die Eingabevorrichtung als Einzelteil in Draufsicht, rein schematisch
- Figur 3: eine der Figur 2 entsprechende Stirnansicht
- Figur 4: eine Variante zu der Ausführung nach den Figuren 2 und 3 in einer Draufsicht.

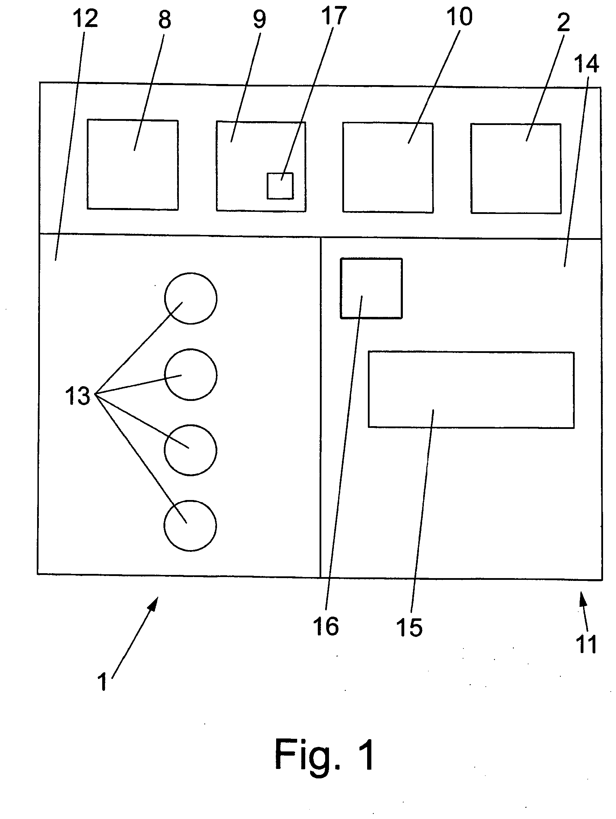

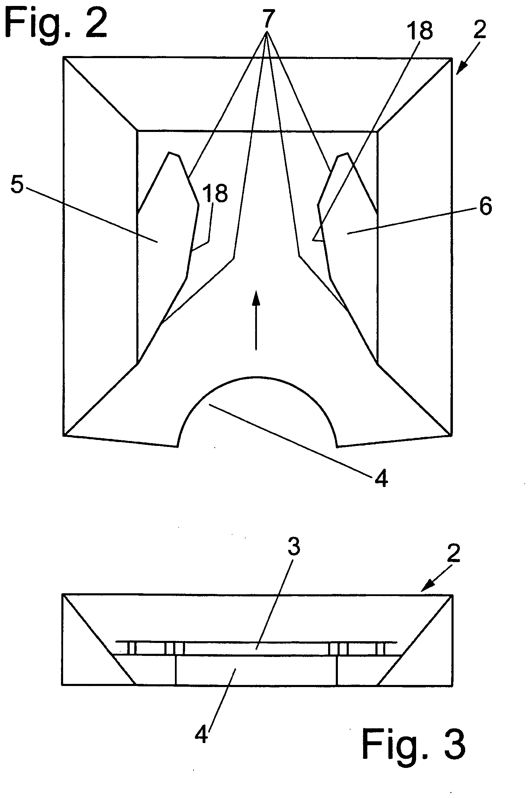

Der in der Figur 1 dargestellte Kassenautomat 1 ist mit einer anhand der Figuren 2 und 3 noch näher erläuterten Eingabevorrichtung 2 ausgestattet. Diese Eingabevorrichtung 2 ist trichterförmig gestaltet und hat einen viereckigen Grundriss. Dieser Trichter ist mit einem Boden 3 versehen, der an der Eingabeseite einen etwa halbkreisförmigen Ausschnitt 4 enthält, damit die einzuführenden Wertscheine weit genug in die Eingabevorrichtung 2 eingeführt werden können. Auf dem Boden 3 der Eingabevorrichtung 2 sind zwei Flachteile 5, 6 festgelegt, die im Abstand zueinander stehen und Ausrichtelemente für Wertscheine bilden. In den Endbereichen der Flachteile 5, 6 sind zumindest an den einander zugewandt liegenden Seiten jeweils schräg zur Mittellängsachse der Eingabevorrichtung 2 bzw. zur Transportrichtung der Wertscheine stehende Schrägflächen 7 vorgesehen, die Ausrichtkeile bilden.

Es ergibt sich aus der Figur 2, dass ein schräg in die Eingabevorrichtung 2 eingeführter Wertschein je nach der Schrägstellung an einer der Schrägflächen 7 anstößt und dadurch durch eine Schwenkbewegung ausgerichtet wird.

Der mit der erfindungsgemäßen Eingabevorrichtung 2 ausgestattete Kassenautomat ist ferner noch mit einer Steuerungseinrichtung 8, einem Kassensystem 9, einem Kartenlesegerät 10, sowie einem Tresor 11 ausgestattet.

Ferner ist der Kassenautomat 1 im dargestellten Ausführungsbeispiel noch in einem ersten Bereich 12 mit vier Rollenspeichern 13 für Banknoten mit unterschiedlichen Werten, beispielsweise für 5-Euro-Scheine, 10-Euro-Scheine, 20-Euro-Scheine und 50-Euro-Scheine ausgestattet. In einem zweiten Bereich 14 des Tresors ist eine Geldkassette 15 untergebracht, in der Banknoten gelagert werden können, die nicht den Notenwerten der auf den Rollenspeichern 13 aufgerollten Banknoten entsprechen. Ferner ist der Kassenautomat 1 noch mit einem Sensor 16 ausgestattet.

Die Erfindung ist nicht auf das dargestellte Ausführungsbeispiel beschränkt. Wesentlich ist, dass die Eingabevorrichtung 2 mit ein oder zwei Flachteilen 5, 6 ausgestattet ist, die eine mechanische Ausrichtung der Wertscheine bewirken. Dabei ist besonders vorteilhaft, wenn diese Flachteile 5, 6 an der Einführseite Schrägflächen 7 aufweisen.

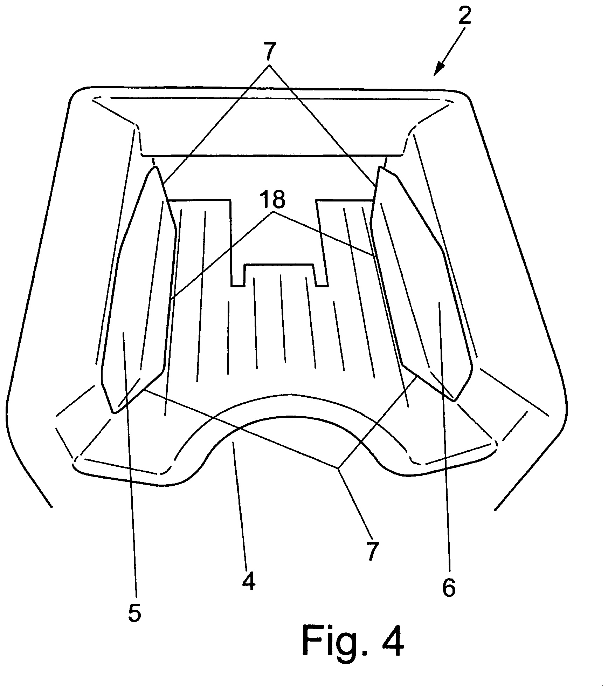

Die Figur 4 zeigt eine weitere Ausführungsform der Eingabevorrichtung 2. Diese Ausführung ist muldenförmig gestaltet und an der dem kreisförmigen Abschnitt 4 abgewandten Seite mit einem weiteren Ausschnitt versehen, in den beispielsweise eine nicht dargestellte Einzugsvorrichtung montiert werden könnte. Fernerhin sind die beiden als Flachteile ausgebildeten Ausrichtelemente 5, 6 an der Eingabeseite keilförmig gestaltet. Die sich daran anschließenden Anlaufflächen 18 stehen ebenfalls schräg zur Mittellängsachse der Eingabevorrichtung 2, so dass die Ausrichtung der Wertscheine sinngemäß in zwei Stufen erfolgt.

## Patentansprüche

1. Eingabevorrichtung für Wertscheine eines Selbstbedienungsgerätes, insbesondere eines Kassenautomaten, wobei die Eingabevorrichtung (2) mit wenigstens einem mechanisch wirkenden Ausrichtelement (5, 6) zur Ausrichtung für die in die Eingabevorrichtung (2) eingeführten Wertscheine versehen ist,
wobei das Ausrichtelement (5, 6) an der Eingabeseite mit zwei im Winkel zueinander stehenden Anlaufflächen (7, 18) versehen ist, wobei der zur Mittellängsachse der Eingabevorrichtung (2) eingeschlossene Schrägungswinkel der ersten Anlauffläche (7) größer ist als der zur Mittellängsachse der Eingabevorrichtung (2) eingeschlossene Winkel der anschließenden Anlauffläche (18) **dadurch gekennzeichnet, dass**
die Eingabevorrichtung (2) mit zwei im Abstand zueinander angeordneten Ausrichtelementen (5, 6) ausgerüstet ist,
dass jedes Ausrichtelement (5, 6) an der Eingabeseite mit zwei im Winkel zueinanderstehenden Anlaufflächen (18) versehen ist, und
dass jedes Ausrichtelement (5,6) an der der Eingabeseite gegenüberliegenden Seite mit einer Schrägfläche (7) versehen ist, die entgegen der eingabeseitigen Anlauffläche (7) zur Mittellängsachse der Eingabevorrichtung (2) entgegengesetzt geneigt ist.

2. Eingabevorrichtung nach Anspruch 1, **dadurch gekennzeichnet, dass** jedes Ausrichtelement als Flachteil (5, 6) ausgebildet ist.

3. Eingabevorrichtung nach einem oder mehreren der vorstehenden Ansprüche, **dadurch gekennzeichnet, dass** jedes Flachteil (5, 6) zumindest im eingabeseitigen Endbereich mit wenigstens einer schräg zur Mittellängsachse der Eingabevorrichtung (2) verlaufenden Anlauffläche (7) versehen ist.

4. Eingabevorrichtung nach einem oder mehreren der vorstehenden Ansprüche, **dadurch gekennzeichnet, dass** jedes Ausrichtelement (5, 6) gegen die Horizontale geneigt ist, wobei der Abstand der einander abgewandt liegenden Kanten zum Boden der Eingabevorrichtung (2) größer ist als der der einander zugewandt liegenden Kanten.

5. Eingabevorrichtung nach einem oder mehreren der vorstehenden Ansprüche, **dadurch gekennzeichnet, dass** jedes Ausrichtelement (5, 6) in Einzugsrichtung der Wertscheine gesehen, direkt vor der Einzugsvorrichtung angeordnet ist.

6. Eingabevorrichtung nach einem oder mehreren der vorstehenden Ansprüche, **dadurch gekennzeichnet, dass** das Ausrichtelement (5, 6) bzw. die Ausrichtelemente (5, 6) mit dem Boden (3) der Eingabevorrichtung ein einstückiges Formteil bildet bzw. bilden.

7. Eingabevorrichtung nach einem oder mehreren der vorstehenden Ansprüche, **dadurch gekennzeichnet, dass** die Eingabevorrichtung (2) trichterförmig, jedoch mit viereckiger Grundkontur gestaltet ist, und dass die Flachteile (5, 6) am Boden (3) der trichterförmigen Eingabevorrichtung (2) festgelegt sind.

## Claims

1. Input device for vouchers of a self-service device, in particular a paying-in machine, wherein the input device (2) is provided with at least one mechanically acting alignment element (5, 6) for aligning the vouchers inserted into the input device (2),
wherein the alignment element (5, 6) is provided on the input side with two run-on surfaces (7, 18) at an angle to each other, wherein the angle of inclination of the first run-on surface (7) enclosed relative to the longitudinal mid-axis of the input device (2) is greater than the angle of the adjacent run-on surface (18) enclosed relative to the longitudinal mid-axis of the input device (2),
**characterized in that**
the input device (2) is equipped with two alignment elements (5, 6) arranged at a distance from each other, **in that** each alignment element (5, 6) is provided on the input side with two run-on surfaces (18) at an angle to each other, and
**in that** each alignment element (5, 6) is provided on the side opposite to the input side with an inclined surface (7), which is inclined in the direction opposite to the input-side run-on surface (7) relative to the longitudinal mid-axis of the input device (2).

2. Input device according to Claim 1, **characterized in that** each alignment element is formed as a flat part (5, 6).

3. Input device according to one or more of the preceding claims, **characterized in that** each flat part (5, 6) is provided, at least in the input-side end area, with at least one run-on surface (7) extending at an angle to the longitudinal mid-axis of the input device (2).

4. Input device according to one or more of the preceding claims, **characterized in that** each alignment element (5, 6) is inclined relative to the horizontal, wherein the distance of the edges located facing away from each other to the base of the input device (2) is greater than that of the edges located facing each other.

5. Input device according to one or more of the preceding claims, **characterized in that** each alignment element (5, 6), viewed in the collection direction of the vouchers, is arranged directly in front of the collection device.

6. Input device according to one or more of the preceding claims, **characterized in that** the alignment element (5, 6) or the alignment elements (5, 6) forms or form a one-piece moulded part with the base (3) of the input device.

7. Input device according to one or more of the preceding claims, **characterized in that** the input device (2) is configured in the shape of a funnel but with a square base contour, and **in that** the flat parts (5, 6) are fixed to the base (3) of the funnel-shaped input device (2).

## Revendications

1. Dispositif d'introduction pour documents de valeur d'un appareil en libre-service, en particulier d'une caisse automatique, dans lequel le dispositif d'introduction (2) est pourvu d'au moins un élément d'orientation à action mécanique (5, 6) destiné à orienter les documents de valeur introduits dans le dispositif d'introduction (2),
dans lequel l'élément d'orientation (5, 6) est pourvu, côté introduction, de deux surfaces d'entrée (7, 18) formant un angle l'une par rapport à l'autre, dans lequel l'angle de biais de la première surface d'entrée (7) formé par rapport à l'axe longitudinal central du dispositif d'introduction (2) est supérieur à l'angle de la surface d'entrée suivante (18) par rapport à l'axe longitudinal central du dispositif d'introduction (2), **caractérisé en ce que**
le dispositif d'introduction (2) est équipé de deux éléments d'orientation (5, 6) disposés à distance l'un de l'autre,
**en ce que** chaque élément d'orientation (5, 6) est pourvu, côté introduction, de deux surfaces d'entrée (18) formant un angle l'une par rapport à l'autre, et
**en ce que** chaque élément d'orientation (5, 6) est pourvu, du côté opposé au côté d'introduction, d'une surface en biais (7) qui est inclinée dans le sens opposé à l'axe longitudinal central du dispositif d'introduction (2) par rapport à la surface d'entrée (7) côté d'introduction.

2. Dispositif d'introduction selon la revendication 1, **caractérisé en ce que** chaque élément d'orientation est réalisé sous la forme d'une partie plane (5, 6).

3. Dispositif d'introduction selon l'une ou plusieurs des revendications précédentes, **caractérisé en ce que** chaque partie plane (5, 6) est pourvue, au moins dans la zone d'extrémité côté introduction, d'au moins une surface d'entrée (7) s'étendant en biais par rapport à l'axe longitudinal central du dispositif d'introduction (2).

4. Dispositif d'introduction selon l'une ou plusieurs des revendications précédentes, **caractérisé en ce que** chaque élément d'orientation (5, 6) est incliné par rapport à l'horizontale, dans lequel la distance entre les bords mutuellement opposés de la partie inférieure du dispositif d'introduction (2) est supérieure à celle des bords mutuellement opposés.

5. Dispositif d'introduction selon l'une ou plusieurs des revendications précédentes, **caractérisé en ce que** chaque élément d'orientation (5, 6) est disposé directement devant le dispositif d'introduction, tel que vu dans le sens d'introduction des documents de valeur.

6. Dispositif d'introduction selon l'une ou plusieurs des revendications précédentes, **caractérisé en ce que** l'élément d'orientation (5, 6) ou les éléments d'orientation (5, 6) forme ou forment avec la partie inférieure (3) du dispositif d'introduction une pièce moulée d'un seul tenant.

7. Dispositif d'introduction selon l'une ou plusieurs des revendications précédentes, **caractérisé en ce que** le dispositif d'introduction (2) présente une forme d'entonnoir, mais avec un contour de base carré, et **en ce que** les parties planes (5, 6) sont fixées à la partie inférieure (3) du dispositif d'introduction en forme d'entonnoir (2).
